# EUROPÄISCHE PATENTANMELDUNG

(11) **EP 0 945 262 A2**
(43) Veröffentlichungstag der Anmeldung: **29.09.1999**
(21) Anmeldenummer: 99105345.5
(22) Anmeldetag: 16.03.1999
(51) Int. Cl.: B32B 27/36

(54) **Transparente Polyesterfolie mit hoher Sauerstoffbarriere und zusätzlicher Funktionalität, Verfahren zu ihrer Herstellung und ihre Verwendung**

(30) Priorität: 25.03.1998 DE 19813267
(71) Anmelder: Mitsubishi Polyester Film GmbH, 65203 Wiesbaden (DE)
(72) Erfinder: Pfeiffer, Herbert, Dr., 55126 Mainz (DE); Bennett, Cynthia, Dr., 55232 Alzey (DE); Crass, Günther, Dipl.-Ing., 65232 Taunusstein-Wehen (DE); Hilkert, Gottfried, Dr., 55291 Saulheim (DE); Roth, Werner, Dr., 65817 Eppstein (DE)
(74) Vertreter: Schweitzer, Klaus, Dr.

(57) **Zusammenfassung**

Offenbart ist eine transparente, biaxial orientierte Polyesterfolie mit einer Basisschicht, die zu mindestens 80 Gew.-% aus einem thermoplastischen Polyester besteht, und mindestens einer Deckschicht, die dadurch gekennzeichnet ist, daß die Deckschicht aus einem Polymer oder einem Gemisch von Polymeren besteht, das mindestens 40 Gew.-% Ethylen-2,6-naphthalat-Einheiten enthält und bis zu 60 Gew.-% an Ethylen-terephthalat-Einheiten und/oder Einheiten aus cycloaliphatischen oder aromatischen Diolen und/oder Dicarbonsäuren enthält, mit der Maßgabe, daß der T_{g}2-Wert der Polyesterfolie über dem T_{g}2-Wert der Basisschicht, aber unter dem T_{g}2-Wert der Deckschicht liegt und mindestens eine Folienoberfläche eine Oberflächenspannung von 35 bis 65 mN/m aufweist und/oder mit einer funktionalen Beschichtung in einer Dicke von 5 bis 100 nm versehen ist. Die Folie besitzt eine geringe Durchlässigkeit für Luftsauerstoff. Sie eignet sich besonders für Verpackungszwecke, speziell zur Verpackung von Lebens- und Genußmitteln, zum Laminieren, Metallisieren und Bedrucken.

## Beschreibung

Die Erfindung betrifft eine transparente, biaxial orientierte Polyesterfolie mit einer Basisschicht, die zu mindestens 80 Gew.-% aus einem thermoplastischen Polyester besteht, und mindestens einer Deckschicht, wobei mindestens eine Folienoberfläche mit einer zusätzlichen Funktionalität ausgerüstet ist. Die Erfindung betrifft weiterhin ein Verfahren zur Herstellung der Folie und ihre Verwendung.

In vielen Fällen wird bei Lebensmittelverpackungen eine hohe Sperrwirkung gegenüber Gasen, Wasserdampf und Aromastoffen verlangt. Üblicherweise werden deshalb metallisierte oder mit Polyvinylidenchlorid (PVDC) beschichtete Polypropylenfolien verwendet. Metallisierte Polypropylenfolien sind jedoch nicht transparent und werden deshalb dort nicht eingesetzt, wo der Blick auf den Inhalt zusätzliche Werbewirksamkeit verspricht. Mit PVDC beschichtete Folien sind zwar transparent, aber die Beschichtung erfolgt - ebenso wie die Metallisierung - in einem zweiten Arbeitsgang, der die Verpackung deutlich verteuert. Ethylen-Vinylalkohol-Copolymere (EVOH) zeigen ebenfalls eine hohe Sperrwirkung. Aber mit EVOH modifizierte Folien sind besonders stark gegenüber Feuchte empfindlich, was den Anwendungsbereich einschränkt. Wegen ihrer schlechten mechanischen Eigenschaften sind sie zudem relativ dick, oder sie müssen kostenintensiv mit anderen Materialien laminiert werden. Außerdem sind sie nach Gebrauch problematisch zu entsorgen. Einige Rohstoffe sind zudem für die Herstellung von Lebensmittelverpackungen ungeeignet bzw. nicht amtlich zugelassen.

Aufgabe der vorliegenden Erfindung ist es deshalb, eine transparente, biaxial orientierte Polyesterfolie mit hoher Sauerstoffbarriere und mindestens einer zusätzlichen Funktionalität zur Verfügung zu stellen, die sich einfach und wirtschaftlich herstellen läßt, die guten physikalischen Eigenschaften der bekannten Folien besitzt und keine Entsorgungsprobleme verursacht.

Gelöst wird die Aufgabe durch eine biaxial orientierte Polyesterfolie mit einer Basisschicht, die zu mindestens 80 Gew.-% aus (mindestens) einem thermoplastischen Polyester besteht und mindestens einer Deckschicht, wobei die Folie dadurch gekennzeichnet ist, daß die Deckschicht(en) aus einem Polymer oder einem Gemisch von Polymeren besteht/bestehen, das mindestens 40 Gew.-% an Ethylen-2,6-naphthalat-Einheiten und bis zu 40 Gew.-% an Ethylenterephthalat-Einheiten und/oder bis zu 60 % Einheiten aus cycloaliphatischen oder aromatischen Diolen und/oder Dicarbonsäuren enthält, mit der Maßgabe, daß der T_{g}2-Wert der Polyesterfolie über dem T_{g}2-Wert der Basisschicht, aber unter dem T_{g}2-Wert der Deckschicht liegt und mindestens eine Folienoberfläche eine Oberflächenspannung von 35 bis 65 mN/m aufweist und/oder mit einer funktionalen Beschichtung in einer Dicke von 5 bis 100 nm versehen ist. Die erfindungsgemäße Folie weist allgemein eine Sauerstoffpermeation von weniger als 80 cm³/m² bar d, bevorzugt weniger als 75 cm³/m² bar d, besonders bevorzugt weniger als 70 cm³/m² bar d auf.

Bevorzugt ist eine Polyesterfolie, in der die Polymere der Deckschicht mindestens 65 Gew.-% an Ethylen-2,6-naphthalat-Einheiten und bis zu 35 Gew.-% an Ethylen-terephthalat-Einheiten enthalten. Davon ist wiederum eine solche Polyesterfolie besonders bevorzugt, in der die Polymere der Deckschicht mindestens 70 Gew.-% an Ethylen-2,6-naphthalat-Einheiten und bis zu 30 Gew.-% an Ethylen-terephthalat-Einheiten enthalten. Die Deckschicht kann jedoch auch vollständig aus Ethylen-2,6-naphthalat-Polymeren bestehen.

Geeignete aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ring. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉) Alkandisäuren besonders geeignet, wobei der Alkanteil geradkettig oder verzweigt sein kann.

Gegenstand der vorliegenden Erfindung ist auch ein Verfahren zur Herstellung dieser Folie. Es umfaßt das
a) Herstellen einer Folie aus Basis-und Deckschicht(en) durch Coextrusion,
b) biaxiale Verstrecken der Folie und
c) Thermofixieren der verstreckten Folie, und
d) Funktionalisieren mindestens einer Folienoberfläche vor, während oder nach den Schritten b und/ oder c.

Zur Herstellung der Deckschicht werden zweckmäßig Granulate aus Polyethylenterephthalat und Polyethylen-2,6-naphthalat im gewünschten Mischungsverhältnis direkt dem Extruder zugeführt. Die beiden Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich Copolymere aus den Homopolymeren bilden.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell oder simultan durchgeführt. Bei der sequentiellen Streckung wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen. Bei der Simultanstreckung wird die Folie gleichzeitig in Längs- und in Querrichtung in einem Kluppenrahmen gestreckt.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgmein im Bereich von 3,0:1 bis 5,0:1, bevorzugt von 3,5:1 bis 4,5:1. Sofern gewünscht, kann sich an die Querstreckung nochmals eine Längsverstreckung und sogar eine weitere Querverstreckung anschließen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Von großem Vorteil bei diesem Verfahren ist, daß dem Extruder Granulate zugegeben werden können, die die Maschine nicht verkleben.

Die Basisschicht der Folie besteht bevorzugt zu mindestens 90 Gew.-% aus dem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly(1 ,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. Geeignete Diol-Comonomere sind beispielsweise Diethylenglykol, Triethylenglykol, aliphatische Glykole der allgemeinen Formel HO-(CH₂)ₙ-OH` wobei n eine ganze Zahl von 3 bis 6 darstellt, verzweigte aliphatische Glykole mit bis zu 6 Kohlenstoff-Atomen, aromatische Diole der allgemeinen Formel HO-C₆H₄-X-C₆H₄-OH, wobei X für -CH₂-, -C(CH₃)₂-, -C(CF₃)₂-, -O-, -S- oder -SO₂- steht, oder Bisphenole der allgemeinen Formel HO-C₆H₄-C₆H₄-OH eingesetzt werden.

Die Dicarbonsäure-Comonomereinheiten leiten sich bevorzugt ab von Benzoldicarbonsäuren, Naphthalindicarbonsäuren, Biphenyl-x,x'-dicarbonsäuren (insbesondere Biphenyl-4,4'-dicarbonsäure), Cyclohexandicarbonsäuren (insbesondere Cyclohexan-1,4-dicarbonsäure), Diphenylacetylen-x,x'-dicarbonsäuren (insbesondere Diphenylacetylen-4,4'-dicarbonsäure), Stilben-x,x'-dicarbonsäure oder (C₁-C₁₆)Alkandicarbonsäuren, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Verarbeitung der Polymere hat es sich als günstig erwiesen, die Polymere für die Basisschicht und die Deckschicht(en) so zu wählen, daß sich die Viskositäten der jeweiligen Polymerschmelzen nicht zu sehr unterscheiden. Im anderen Fall ist mit Fließstörungen oder Streifenbildung auf der fertigen Folie zu rechnen. Für die Beschreibung der Viskositätsbereiche der beiden Schmelzen wird eine modifizierte Lösungsmittelviskosität (SV-Wert oder solution viscosity) verwendet. Die Lösungsmittelviskosität ist ein Maß für das Molekulargewicht des jeweiligen Polymers und korreliert mit der Schmelzeviskosität. Je nach chemischer Zusammensetzung des verwendeten Polymers ergeben sich andere Korrelationen. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie zu gewährleisten, sollte der SV-Wert der Copolymere für die Deckschicht im Bereich von 300 bis 900 liegen, vorzugsweise zwischen 400 und 800, insbesondere zwischen 500 und 700. Falls erwünscht, kann an den jeweiligen Granulaten eine Festphasenkondensation durchgeführt werden, um die benötigten Schmelzeviskositäten der Materialien einzustellen. Allgemein gilt, daß sich die Schmelzeviskositäten der Polymerschmelzen für Basis- und Deckschicht(en) um nicht mehr als den Faktor 5, vorzugsweise den Faktor 2 bis 3 unterscheiden sollten.

Die Polymere für die Deckschicht können auf 3 verschiedene Weisen hergestellt werden:
a) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.
b) Polyethylenterephthalat (PET) und Polyethylen-2,6-naphthalat (PEN) werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepreßt und granuliert.
c) PET und PEN werden als Granulat im gewünschten Verhältnis gemischt und die Mischung dem Extruder für die Deckschicht zugeführt. Hier findet die Umesterung zum Copolymer direkt während der Herstellung der Folie statt. Dieses Verfahren hat den Vorteil, daß es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform der Erfindung sind 0,1 bis 20 Gew.-% der Polymere der Basisschicht identisch mit denen der Deckschicht. Diese werden der Basisschicht entweder direkt bei der Extrusion beigemischt oder sind automatisch in der Folie durch Regeneratzugabe enthalten. Der Anteil dieser Copolymere in der Basisschicht ist so gewählt, daß die Basisschicht teilkristallinen Charakter aufweist.

In einer weiteren Ausführungsform umfaßt die Folie auf der der Deckschicht abgewandten Seite eine weitere Deckschicht aus Polyethylenterephthalat, die Pigmente enthält.

Die erfindungsgemäße Folie zeigt eine überraschend hohe Sauerstoffbarriere. Werden dagegen für die Deckschicht(en) Polymere verwendet, die weniger als 40 Gew.-% Ethylen-2,6-naphthalat-Einheiten und mehr als 40 Gew.-% Ethylenterephthalat-Einheiten enthalten, dann ist die Folie in manchen Fällen zwar etwas weniger durchlässig für Sauerstoff als eine Standardpolyesterfolie (die zu 100 Gew.-% aus Polyethylenterephthalat besteht), die Durchlässigkeit ist jedoch noch immer viel zu hoch. Es wurde sogar gefunden, daß die Sauerstoffbarriere geringer ist als bei einer Standardpolyesterfolie, wenn die Deckschicht 30 bis 40 Gew.-% Ethylen-2,6-naphthalat-Einheiten und 60 bis 70 Gew.-% Ethylenterephthalat-Einheiten enthält. Selbst unter diesen Umständen kann jedoch eine Folie mit einer Deckschicht, die zwischen 5 und 40 Gew.-% Ethylen-2,6-napthalat-Einheiten und mehr als 40 Gew.-% Ethylen-terephthalat-Einheiten enthält vorteilhaft sein, wenn die Sauerstoffbarriere für die betreffende Anwendung keine entscheidende Rolle spielt.

Weiterhin zeichnen sich die erfindungsgemäßen Folien dadurch aus, daß die Glasübergangstemperatur T_{g} des (Co)polymers bzw. der (Co)polymere der Deckschicht(en) im Vergleich zum Stand der Technik höher liegt als die Glasübergangstemperatur T_{g} der Polymere der Basisschicht. Die Glasübergangstemperatur der eingesetzten (Co)polymere für die Deckschicht(en) liegt vorzugsweise im Bereich von 80 bis 120 °C. Bei der Bestimmung der Glasübergangstemperaturen mittels Differential Scanning Calorimetry (DSC) können die Übergänge der beiden Schichten nicht unterschieden werden.

Glasübergänge, die beim ersten Aufheizvorgang an biaxial orientierten, wärmefixierten Folien bestimmt werden (im folgenden T_{g}1 genannt), sind durch die Kristallinität sowie die molekularen Spannungen im amorphen Anteil der Proben in ihrem Ausmaß relativ gering, über einen breiten Temperaturbereich verteilt und zu höheren Temperaturen verschoben. Vor allem aufgrund von Orientierungseffekten eignen sie sich nicht zur Charakterisierung eines Polymers. Die Auflösung von DSC-Meßgeräten reicht oft nicht aus, um die wegen der Orientierung und Kristallinität kleinen und 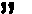 verschmierten" Glasstufen im ersten Aufheizvorgang (T_{g}1) der einzelnen Schichten der erfindungsgemäßen Folie zu erfassen. Wenn die Proben aufgeschmolzen und dann unter ihre Glasübergangstemperatur rasch wieder abgekühlt (abgeschreckt) werden, so werden die Orientierungseffekte eliminiert. Beim erneuten Aufheizen werden dann Glasübergänge (hier als T_{g}2 bezeichnet) gemessen, die eine höhere Intensität haben und charakteristisch sind für die jeweiligen Polymere. Die Glasübergänge der einzelnen Schichten lassen sich allerdings auch hier nicht unterscheiden, weil sich die Schichten beim Aufschmelzen vermischen und die darin enthaltenen Polyester untereinander Umesterungsreaktionen eingehen. Es ist jedoch völlig ausreichend, die T_{g}2 der gesamten coextrudierten Folien mit der T_{g}2 des für die Basisschicht verwendeten Polymers zu vergleichen. In bekannten Folien liegt der T_{g}2-Wert der Basisschicht höher als der der coextrudierten Folie, während der T_{g}2-Wert der Deckschicht niedriger liegt als der der Basisschicht und auch der der coextrudierten Folie. In der erfindungsgemäßen Folie ist dies gerade umgekehrt. Hier liegt der T_{g}2-Wert der coextrudierten Folie höher als der der Basisschicht, aber unterhalb des T_{g}2-Werts der Deckschicht.

Die Basisschicht und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 5 Gew.-% erwiesen. Eine detaillierte Beschreibung der Antiblockmittel findet sich beispielsweise in der EP-A 0 602 964.

Erfindungsgemäß ist mindestens eine Folienoberfläche so behandelt, daß ihre Oberflächenspannung im Bereich von 35 bis 65 mN/m, vorzugsweise 40 bis 60, insbesondere 45 bis 55 mN/M liegt. Dies wird durch eine Corona- bzw. Flammbehandlung erreicht, die sich üblicherweise an die Thermofixierung der Folie anschließt. Ebenso kann die Behandlung an anderen Stellen im Folienherstellprozeß, bspw. vor oder nach der Längsstreckung erfolgen. Alternativ oder zusätzlich zu der oben beschriebenen Oberflächenbehandlung kann die Folie auf mindestens einer ihrer Oberflächen beschichtet werden, so daß die Beschichtung auf der fertigen Folie eine Dicke von 5 bis 100 nm, bevorzugt 20 bis 700 nm, insbesondere 30 bis 50 nm aufweist. Die Beschichtung wird bevorzugt In-line aufgebracht, d.h. während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtungen äußerst homogen in den genannten Schichtdicken auftragen lassen. Die Beschichtungen werden bevorzugt als Lösungen, Suspensionen oder Dispersionen aufgetragen, besonders bevorzugt als wäßrige Lösung, Suspension oder Dispersion. Die genannten Beschichtungen verleihen der Folienoberfläche eine zusätzliche Funktion bspw. wird die Folie dadurch siegelfähig, bedruckbar, metallisierbar, sterilisierbar, antistatisch oder verbessern z.B. die Aromabarriere oder ermöglichen die Haftung zu Materialien, die ansonsten nicht auf der Folienoberfläche haften würden (z.B. fotografische Emulsionen). Beispiele für Stoffe/Zusammensetzungen, die zusätzliche Funktionalität verleihen sind: Acrylate, wie sie bspw. beschrieben sind in der WO 94/13476, Ethylvinylalkohole, PVDC, Wasserglas (Na₂SiO₄), hydrophilische Polyester (5-Na-sulfoisophthalsäurehaltige PET/IPA Polyester wie sie bspw. beschrieben sind in der EP-A-0 144 878, US-A-4,252,885 oder EP-A-0 296 620, Vinylacetate wie sie bspw. beschrieben sind in der WO 94/13481, Polyvinylacetate, Polyurethane, Alkali- oder Erdalkalisalze von C₁₀-C₁₈-Fettsäuren, Butadiencopolymere mit Acrylnitril oder Methylmethacrylat, Methacrylsäure, Acrylsäure oder deren Ester.

Die genannten Stoffe/Zusammensetzungen werden als verdünnte Lösung, Emulsion oder Dispersion vorzugsweise als wäßrige Lösung, Emulsion oder Disperson auf eine oder beide Folienoberflächen aufgebracht und anschließend das Lösungsmittel verflüchtigt. Werden die Beschichtungen In-line vor der Questreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Die getrockneten Beschichtungen haben dann Schichtdicken von 5 bis 100 nm, bevorzugt 20 bis 70 nm, insbesondere 30 bis 50 nm.

Die erfindungsgemäße Polyesterfolie enthält vorzugsweise noch eine zweite Deckschicht. Aufbau, Dicke und Zusammensetzung einer zweiten Deckschicht können unabhängig von der bereits vorhandenen Deckschicht gewählt werden, wobei die zweite Deckschicht ebenfalls die bereits genannten Polymere oder Polymermischungen enthalten kann, welche aber nicht mit der der ersten Deckschicht identisch sein müssen. Die zweite Deckschicht kann auch andere gängige Deckschichtpolymere enthalten.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere 1,0 bis 10 µm.

Die Dicke der Deckschicht(en) ist im allgemeinen größer als 0,1 µm und liegt vorzugsweise im Bereich von 0,2 bis 5 µm, insbesondere 0,2 bis 4 µm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 100 µm, insbesondere 5 bis 50 µm, vorzugsweise 6 bis 30 µm, wobei die Basisschicht einen Anteil von vorzugsweise etwa 40 bis 90 % an der Gesamtdicke hat.

Ein weiterer Vorteil besteht darin, daß die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einem Anteil von bis bis 50 Gew.-%, bevorzugt 10 bis 50 Gew.-%, jeweils bezogen auf das Gesamtgewicht der Folie, wiederverwendet werden kann, ohne daß dabei die physikalischen Eigenschaften der Folie nennenswert negativ beeinflußt werden.

Die Folie eignet sich hervorragend zum Verpacken von Nahrungs- und Genußmitteln, und je nach Funktionalität einer oder beider Oberrflächen als fotografischer Film, als grafischer Film, laminierfähiger Film, metallisierbarer Film oder bedruckbarer Film.

Zur Charakterisierung der Rohstoffe und der Folien wurden die folgenden Methoden benutzt:

Die Messung der Sauerstoffbarriere erfolgte mit einem OX-TRAN 2/20 von Mocon Modern Controls (USA) entsprechend DIN 53 380, Teil 3.

Zur Bestimmung des SV-Wertes (SV = solvent viscosity) wurde eine Polyester-Probe in einem Lösungsmittel (Dichloressigsäure) gelöst (1 Gew-%ige Lösung). Die Viskosität dieser Lösung sowie die Viskosität des reinen Lösungsmittels wurden in einem Ubbelohde-Viskosimeter gemessen. Aus den beiden Werten wurde der Quotient (= relative Viskosität ηᵣₑₗ) ermittelt, davon 1,000 abgezogen und dieser Wert mit 1000 multipliziert. Das Resultat war der SV-Wert ( 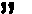 solution viscosity").

Die Reibung wurde nach DIN 53 375 bestimmt. Die Gleitreibungszahl wurde 14 Tage nach der Produktion gemessen.

Die Oberflächenspannung wurde mit der sogenannten Tintenmethode (DIN 53 364) bestimmt.

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Die Glasübergangstemperaturen T_{g}1 und T_{g}2 wurden anhand von Folienproben mit Hilfe der DSC (Differential Scanning Calorimetry) bestimmt. Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang T_{g}1 ermittelt. Die Proben zeigten vielfach eine Enthalpierelaxation (ein Peak) zu Beginn des stufenförmigen Glasübergangs. Als T_{g}1 wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet. Möglicherweise überdeckten die peakförmigen Enthalpierelaxationen die Feinstruktur der Stufe oder die Auflösung des Gerätes war für eine Auftrennung der kleinen, 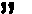 verschmierten" Übergänge von orientierten, kristallinen Proben nicht ausreichend. Um die thermische Vorgeschichte zu eliminieren, wurden die Proben nach dem Aufheizen 5 Minuten bei 300° C gehalten und dann anschließend mit flüssigem Stickstoff abgeschreckt. Aus dem Thermogramm für das zweite Aufheizen wurde die Temperatur für den Glasübergang T_{g}2 als die Temperatur bei halber Stufenhöhe entnommen.

Die folgenden Beispiele illustrieren die Erfindung. Die verwendeten Produkte (Warenzeichen und Herstellerfirma) sind jeweils nur einmal angegeben und beziehen sich dann auch auf die folgenden Beispiele.

### Beispiel 1

Das Polymer für die Deckschicht wurde durch gemeinsame Polykondensation hergestellt. Dazu wurden Dimethylterephthalat und Naphthalin-2,6-dicarbonsäure-dimethylester in einem Reaktor im Molverhältnis 0,54 : 1,00 (entspricht einer Zusammensetzung von 30 Gew.-% Ethylenterephthalat-Einheiten und 70 Gew.-% Ethylen-2,6-naphthalat-Einheiten im fertigen Copolymer) gemischt und mit Ethyenglykol und 300 ppm Manganacetat als Katalysator versetzt. Bei einer Temperatur von 160 bis 250 °C und bei Atmosphärendruck wurde unter Rühren die Umesterung durchgeführt. Das dabei entstehende Methanol wurde abdestilliert. Anschließend wurde eine äquimolare Menge phosphorige Säure als Stabilisator und 400 ppm Antimontrioxid als Katalysator zugegeben. Bei 280 °C und einem Druck von weniger als 1 mbar wurde dann unter Rühren die Polykondensation durchgeführt. Anhand des am Rührer gemessenen Drehmoments ließ sich das erreichte Molekulargewicht ermitteln. Die Schmelze wurde nach Ende der Reaktion mit Stickstoff aus dem Reaktor gedrückt und granuliert.

### Beispiel 2

Es wurden handelsübliche Polyethylenterephthalat- und Polyethylen-2,6-naphthalat-Granulate verwendet. Die Granulate wurden jeweils etwa 4 h bei einer Temperatur von etwa 160 °C getrocknet und kristallisiert. Anschließend wurden die beiden Materialien in einem Verhältnis von 30 : 70 (30 Gew.-% Polyethylenterephthalat- und 70 Gew.-% Polyethylen-2,6-naphthalat) in einen Mischer gegeben und dort unter Rühren homogenisiert. Die Mischung wurde anschließend in einem Zweischnecken-Compounder (ZSK der Fa. Werner und Pfleiderer, Stuttgart) bei einer Temperatur von etwa 300 °C und einer Verweilzeit von ca. 3 min extrudiert. Die Schmelze wurde zu Strängen extrudiert und in Form von Chips geschnitten. In der Extrusion entstand ein Copolymer durch Reaktion zwischen dem Polyethylenterephthalat und Polyethylen-2,6-naphthalat.

### Beispiel 3

Beispiel 2 wurde wiederholt mit der Abweichung, daß Chips aus Polyethylenterephthalat und Polyethylen-2,6-naphthalat in einem Mischungsverhältnis von 3 : 7 direkt dem Einschneckenextruder für die Folienherstellung zugeführt wurden. Dort wurden die beiden Materialien bei etwa 300 °C extrudiert. Die Schmelze wurde filtriert und in einer Mehrschichtdüse zu einem Flachfilm ausgeformt und als Deckschicht der Basisschicht überlagert. Der Mehrschichtfilm wurde über die Düsenlippe ausgestoßen und auf einer Kühlwalze verfestigt. Die Verweilzeit der beiden Polymere in der Extrusion betrug ca. 5 min. Die weiteren Verarbeitungsschritte waren wie oben angegeben. Auch hier entstand das Copolymer in der Extrusion bei den angegebenen Bedingungen.

### Beispiel 4

Chips aus Polyethylenterephthalat wurden bei 160 °C auf eine Restfeuchte von weniger als 50 ppm getrocknet und dem Extruder für die Basisschicht zugeführt. Daneben wurden Chips aus Polyethylenterephthalat und Polyethylen-2,6-naphthalat (im Gewichtsverhältnis von 3 : 7) ebenfalls bei 160 °C auf eine Restfeuchte von 50 ppm getrocknet und den beiden Extrudern für die Deckschichten zugeführt. Die Bedingungen im Extruder für die Deckschichten waren wie in Beispiel 3.

Durch Coextrusion und anschließende stufenweise Orientierung in Längs- und Querrichtung wurde dann eine transparente dreischichtige Folie mit symmetrischem Aufbau und einer Gesamtdicke von 12 µm hergestellt. Die Deckschichten hatten eine Dicke von jeweils 2,0 µm.

### Basisschicht:

- 95 Gew.-%: Polyethylenterephthalat (RT 49 von Hoechst AG) mit einem SV-Wert von 800 und
- 5 Gew.-%: Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5 µm.

### Deckschichten:

- 70 Gew.-%: Polyethylen-2,6-naphthalat (®Polyclear N 100 Prepolymer von Hoechst AG) mit einem SV-Wert von 800,
- 20 Gew.-%: Polyethylenterephthalat mit einem SV-Wert von 800 und
- 10 Gew.-%: Masterbatch aus 99,0 Gew.-% Polyethylenterephthalat und 1,0 Gew.-% Kieselsäurepartikel mit einer mittleren Teilchengröße von 2,0 µm.

Die einzelnen Verfahrensschritte waren:

| | | | |
|---|---|---|---|
| Extrusion | Temperaturen: | Deckschicht: | 300 °C |
| | | Basisschicht: | 300 °c |
| | Temperatur der Abzugswalze: | | 30°C |
| | Düsenspaltweite: | | 1 mm |
| | Temperatur der Abzugswalze: | | 30 °C |
| Längsstreckung | Temperatur: | | 85-135 °C |
| | Längsstreckverhältnis: | | 4,0 : 1 |
| Querstreckung | Temperatur: | | 85-135 °C |
| | Querstreckverhältnis: | | 4,0 : 1 |
| Fixierung | Temperatur: | | 230 °C |

Nach der Fixierung wurde - wie in allen folgenden Beispielen - die A-seite coronabehandelt. Die Oberflächespannung betrug 52 mN/m.

Die Folie hatte die geforderte Sauerstoffbarriere.

### Beispiel 5

Analog zu Beispiel 4 wurde durch Coextrusion eine dreischichtige Folie mit einer Gesamtdicke von 12 µm hergestellt. Die Deckschicht A hatte eine Dicke von 2,0 µm, die Deckschicht C von 1,5 µm.

### Basisschicht:

- 100 Gew.-%: Polyethylenterephthalat mit einem SV-Wert von 800

### Deckschicht A:

- 70 Gew.-%: Polyethylen-2,6-naphthalat mit einem SV-Wert von 800,
- 20 Gew.-%: Polyethylenterephthalat mit einem SV-Wert von 800 und
- 10 Gew.-%: Masterbatch aus 99,0 Gew.-% Polyethylenterephthalat und 1,0 Gew.-% Kieselsäurepartikel mit einer mittleren Teilchengröße von 2,0 µm.

### Deckschicht C:

- 80 Gew.-%: Polyethylenterephthalat mit einem SV-Wert von 800 und
- 20 Gew.-%: Masterbatch aus 99,0 Gew.-% Polyethylenterephthalat und 1,0 Gew.-% Kieselsäurepartikel, die zu 50 % eine mittlere Teilchengröße von 2,5 µm und zu 50 % eine mittlere Teilchengröße von 1,0 µm hatten.

Die Verfahrensbedingungen waren für alle Schichten wie im Beispiel 4.

### Beispiel 6

Eine coextrudierte Folie mit der Rezeptur gemäß Beispiel 5, bei der die Deckschicht A 2,0 µm dick und wie folgt zusammengesetzt war:
- 90 Gew.-%: Polyethylen-2,6-naphthalat mit einem SV-Wert von 800 und
- 10 Gew.-%: Masterbatch aus 99,0 Gew.-% Polyethylenterephthalat und 1,0 Gew.-% Kieselsäurepartikel mit einer mittleren Teilchengröße von 1,0 µm,
wurde unter den Verfahrensbedingungen gemäß Beispiel 4 hergestellt.

### Beispiel 7

Eine coextrudierte Folie mit der Rezeptur gemäß Beispiel 5, bei der die Deckschicht A 2,5 µm dick und wie folgt zusammengesetzt war:
- 90 Gew.-%: Polyethylen-2,6-naphthalat mit einem SV-Wert von 800,
- 10 Gew.-%: Masterbatch aus 99,0 Gew.-% Polyethylen-2,6-naphthalat mit einem SV-Wert von 800 und 1,0 Gew.-% Kieselsäurepartikel mit einer mittleren Teilchengröße von 1,0 µm, wurde unter den Verfahrensbedingungen gemäß Beispiel 4 hergestellt. Doch wurden jetzt die Temperaturen bei der Längs- und Querstreckung um etwa 10 °C angehoben.

### Beispiel 8

Analog zu Beispiel 5 wurde durch Coextrusion eine dreischichtige Folie mit einer Basisschicht und zwei Deckschichten hergestellt. Die Gesamtdicke der Folie betrug 12 µm. Die Deckschicht A hatte dabei eine Dicke von 3, die Deckschicht C von 1,5 µm.

### Basisschicht:

- 100 Gew.-%: Polyethylenterephthalat mit einem SV-Wert von 800

### Deckschicht A:

- 100 Gew.-%: Polyethylen-2,6-naphthalat mit einem SV-Wert von 800

### Deckschicht C:

- 80 Gew.-%: Polyethylenterephthalat mit einem SV-Wert von 800 und
- 20 Gew.-%: Masterbatch aus 99,0 Gew.-% Polyethylenterephthalat und 1,0 Gew.-% Kieselsäurepartikel, die zu 50 % eine mittlere Teilchengröße von 2,5 µm und zu 50 % eine mittlere Teilchengröße von 1,0 µm hatten.

Die Verfahrensbedingungen waren für alle Schichten wie in Beispiel 7 angegeben.

### Beispiel 9

Analog zu Beispiel 4 wurde eine coextrudierte Folie hergestellt, wobei jetzt das Copolymer für die Deckschichten nach Beispiel 2 hergestellt wurde. Sonst waren die Bedingungen wie im Beispiel 4 angegeben.

### Beispiel 10

Analog zu Beispiel 4 wurde eine coextrudierte Folie hergestellt, wobei jetzt das Copolymer für die Deckschichten nach Beispiel 1 hergestellt wurde. Sonst waren die Bedingungen wie in Beispiel 4 angegeben.

### Beispiel 11

In ähnlicher Weise wie in Beispiel 4 wurde durch Coextrusion eine zweischichtige Folie mit einer Basis- und einer Deckschicht und einer Gesamtdicke von 12 µm hergestellt. Die Deckschicht hatte dabei eine Dicke von 3 µm.

### Basisschicht:

- 80 Gew.-%: Polyethylenterephthalat mit einem SV-Wert von 800 und
- 20 Gew.-%: Masterbatch aus 99,0 Gew.-% Polyethylenterephthalat und 1,0 Gew.-% Kieselsäurepartikel, die zu 50 % eine mittlere Teilchengröße von 2,5 µm und zu 50 % eine mittlere Teilchengröße von 1,0 µm hatten.

### Deckschicht:

- 60 Gew.-%: Polyethylennaphthalat mit einem SV-Wert von 800,
- 30 Gew.-%: Polyethylenterephthalat mit einem SV-Wert von 800 und
- 10 Gew.-%: Masterbatch aus 99,0 Gew.-% Polyethylenterephthalat und 1,0 Gew.-% Kieselsäurepartikel mit einer mittleren Teilchengröße von 2,0 µm.

Die Verfahrensbedingungen waren für alle Schichten wie in Beispiel 4 gewählt.

### Beispiel 12

Es wurde eine dreischichtige Folie wie im Beispiel 7 beschrieben hergestellt mit der einzigen Abweichung, daß die Dicke der Deckschicht A nur 1,0 µm betrug.

### Vergleichsbeispiel V1

Es wurde eine Folie entsprechend Beispiel 11 hergestellt. Für die Deckschicht A wurde jedoch ein Copolyester aus 82 Gew.-% Ethylenterephthalat und 18 Gew.-% Ethylenisophthalat verwendet.

### Vergleichsbeispiel V2

Es wurde eine Folie entsprechend Beispiel 11 hergestellt. Für die Deckschicht A wurde jetzt ein Polymergemisch aus 70 Gew.-% Ethylenterephthalat und 30 Gew.-% Ethylen-2,6-naphthalat verwendet.

### Vergleichsbeispiel V3

Es wurde eine Folie entsprechend Beispiel 11 hergestellt. Für die Deckschicht A wurde jetzt ein Polymergemisch aus 90 Gew.-% Ethylenterephthalat und 10 Gew.-% Ethylen-2,6-naphthalat verwendet.

### Vergleichsbeispiel V4

Eine einschichtige PET-Folie wurde mit folgender Schichtzusammensetzung hergestellt:
- 80 Gew.-%: Polyethylenterephthalat mit einem SV-Wert von 800 und
- 20 Gew.-%: Masterbatch aus 99,0 Gew.-% Polyethylenterephthalat und 1,0 Gew.-% Kieselsäurepartikel, die zu 50 % eine mittlere Teilchengröße von 2,5 µm und zu 50 % eine mittlere Teilchengröße von 1,0 µm hatten.

### Vergleichsbeispiel V5

Eine einschichtige PEN-Folie wurde mit folgender Zusammensetzung hergestellt:
- 80 Gew.-%: Polyethylen-2,6-naphthalat mit einem SV-Wert von 1000 und
- 20 Gew.-%: Masterbatch aus 99,0 Gew.-% Polyethylen-2,6-naphthalat und 1,0 Gew.-% Kieselsäurepartikel, die zu 50 % eine mittlere Teilchengröße von 2,5 µm und zu 50 % eine mittlere Teilchengröße von 1,0 µm hatten.

Die Folie zeigte zwar gute Barrierewerte; sie ist jedoch aufgrund der hohen Herstellungskosten für Lebensmittelverpackungen ungeeignet.

Die Eigenschaften der gemäß den Beispielen 4 bis 12 und V1 bis V5 hergestellten Folien sind in Tabelle 2 zusammengestellt.

**Tabelle 1**

| Beispiel Nr. | Ethylen-2,6-naphthalat-Einheiten in der Deckschicht A (in Gew.-%) | Ethylenterephthalat-Einheiten in der Deckschicht (in Gew.-%) | Ethylenisophthalat-Einheiten in der Deckschicht A (in Gew.-%) | T_{g}2 (in °C) |
|---|---|---|---|---|
| 4 | 70 | 30 | 0 | 82.5 |
| 5 | 70 | 30 | 0 | 81.0 |
| 6 | 90 | 10 | 0 | 86.0 |
| 7 | 100 | 0 | 0 | 90.0 |
| 8 | 100 | 0 | 0 | 90.0 |
| 9 | 70 | 30 | 0 | 82.5 |
| 10 | 70 | 30 | 0 | 82.5 |
| 11 | 60 | 40 | 0 | 83.0 |
| 12 | 100 | 0 | 0 | 86.0 |
| V1 | 0 | 82 | 18 | 72.0 |
| V2 | 30 | 70 | 0 | 81.0 |
| V3 | 10 | 90 | 0 | 80.5 |
| V4 | 0 | 100 | 0 | 80.0 |
| V5 | 100 | 0 | 0 | 115.0 |

**Tabelle 2**

| Beispiel Nr. | Foliendicke (µm) | Deckschichtdicke A/C(A) (µm) | Folienaufbau | Sauerstoffpermeation (cm³/m² bar d) | Glanz (60° Meßwinkel) | | Trübung |
|---|---|---|---|---|---|---|---|
| | | | | | A-Seite | C-Seite | |
| 4 | 12 | 2,0/2,0 | ABA | 70 | 175 | 175 | 2,5 |
| 5 | 12 | 2,0/1,5 | ABC | 80 | 174 | 175 | 2,6 |
| 6 | 12 | 2,0/1,5 | ABC | 65 | 176 | 175 | 2,5 |
| 7 | 12 | 2,5/1,5 | ABC | 55 | 155 | 155 | 4,0 |
| 8 | 12 | 3,0/1,5 | ABC | 45 | 160 | 155 | 4,0 |
| 9 | 12 | 2,0/2,0 | ABA | 70 | 175 | 175 | 2,5 |
| 10 | 12 | 2,0/2,0 | ABA | 70 | 175 | 175 | 2,5 |
| 11 | 12 | 3,0 | AB | 80 | 175 | 178 | 1,5 |
| 12 | 12 | 1,0/1,0 | ABC | 62 | 160 | 165 | 3,5 |
| V1 | 12 | 3,0 | AB | 102 | 145 | 160 | 3,0 |
| V2 | 12 | 3,0 | AB | 110 | 120 | 150 | 6,5 |
| V3 | 12 | 3,0 | AB | 95 | 175 | 175 | 1,5 |
| V4 | 12 | 0 | A | 100 | 175 | 178 | 4,0 |
| V5 | 12 | 0 | A | 30 | 175 | 178 | 4,0 |

## Patentansprüche

1. Transparente, biaxial orientierte Polyesterfolie mit einer Basisschicht, die zu mindestens 80 Gew.-% aus einem thermoplastischen Polyester besteht, und mindestens einer Deckschicht, dadurch gekennzeichnet, daß die Deckschicht aus einem Polymer oder einem Gemisch von Polymeren besteht, das mindestens 40 Gew.-% Ethylen-2,6-naphthalat-Einheiten enthält und bis zu 40 Gew.-% an Ethylen-terephthalat-Einheiten und ggf. bis zu 60 Gew.-% an Einheiten aus cycloaliphatischen oder aromatischen Diolen und/oder Dicarbonsäuren enthält, mit der Maßgabe, daß der T_{g}2-Wert der Polyesterfolie über dem T_{g}2-Wert der Basisschicht, aber unter dem T_{g}2-Wert der Deckschicht liegt, und mindestens eine Folienoberfläche eine Oberflächenspannung von 35 bis 65 mN/m aufweist und/oder mit einer funktionalen Beschichtung in einer Dicke von 5 bis 100 nm versehen ist.

2. Folie gemäß Anspruch 1, dadurch gekennzeichnet, daß die Deckschicht mindestens 65 Gew.-%, bevorzugt mindestens 70 Gew.-%, an Ethylen-2,6-naphthalat-Einheiten enthält.

3. Folie gemäß Anspruch 1 oder 2, dadurch gekennzeichnet, daß sie eine Sauerstoffpermeation von weniger als 80 cm³/m² bar d, bevorzugt weniger als 75 cm³/m² bar d, besonders bevorzugt weniger als 70 cm³/m² bar d, aufweist.

4. Folie gemäß einem oder mehreren der Ansprüche 1 bis 3, dadurch gekennzeichnet, daß die Deckschicht eine Dicke von 0,2 bis 6 µm, vorzugsweise von 0,3 bis 5,5 µm, besonders bevorzugt von 0,3 bis 5,0 µm, aufweist.

5. Folie gemäß einem oder mehreren der Ansprüche 1 bis 4, dadurch gekennzeichnet, daß sie zweischichtig ist und aus der Basisschicht und der Deckschicht besteht.

6. Folie gemäß einem oder mehreren der Ansprüche 1 bis 4, dadurch gekennzeichnet, daß sie dreischichtig ist und aus der Basisschicht und je einer Deckschicht auf beiden Seiten der Basisschicht besteht.

7. Folie gemäß einem oder mehreren der Ansprüche 1 bis 6, dadurch gekennzeichnet, daß mindestens eine der Deckschichten pigmentiert ist.

8. Folie gemäß einem oder mehreren der Ansprüche 1 bis 7, dadurch gekennzeichnet, daß die Oberflächenspannung mittels Coronabehandlung erzielt wird.

9. Folie gemäß einem oder mehreren der Ansprüche 1 bis 8, dadurch gekennzeichnet, daß die funktionale Beschichtung einen oder mehrere Stoffe/Zusammensetzungen enthält, die ausgewählt werden aus: Acrylaten, Ethylvinylalkohol, PVDC, Wasserglas, hydrophilisierte Polyester, Vinylacetat, Polyvinylacetaten, Polyurethanen, Alkali- und Erdalkalisalzen von C₁₀-C₁₈-Fettsäuren, Butadiencopolymere mit Acrylnitril oder Methylmethacrylat, Methacrylsäure, Acrylsäure und Methacrylsäureester und Acrylsäureester.

10. Transparente, biaxial orientierte Polyesterfolie mit einer Basisschicht, die zu mindestens 80 Gew.-% aus einem thermoplastischen Polyester besteht, und mindestens einer Deckschicht, dadurch gekennzeichnet, daß die Deckschicht aus einem Polyester oder einem Gemisch von Polymeren besteht, das mindestens 5 Gew.-% Ethylen-2,6-naphthalat-Einheiten enthält und bis zu 40 Gew.-% an Ethylen-terephthalat-Einheiten und ggf. bis zu 60 Gew.-% an Einheiten aus cycloaliphatischen oder aromatischen Diolen und/oder Dicarbonsäure enthält, mit der Maßgabe, daß der T_{g}2-Wert der Polyesterfolie über dem T_{g}2-Wert der Basisschicht, aber unter dem T_{g}2-Wert der Deckschicht liegt und mindestens eine Folienoberfläche eine Oberflächenspannung von 35 bis 65 mN/m aufweist und/oder mit einer funktionalen Beschichtung in einer Dicke von 5 bis 100 nm versehen ist.

11. Folie nach einem oder mehreren der Ansprüche 1 bis 10, dadurch gekennzeichnet, daß sie auf mindestens einer Oberfläche metallisiert oder mit SiOₓ oder AlₓO_{y} beschichtet ist.

12. Verfahren zur Herstellung der Folie nach einem oder mehreren der Ansprüche 1 bis 10, umfassend die Schritte
a) Herstellen einer Folie aus Basis- und Deckschicht(en) durch Co-extrusion,
b) biaxiales Verstrecken der Folie und
c) Thermofixieren der verstreckten Folie
und Funktionalisieren mindestens einer Folienoberfläche vor, während oder nach den Schritten b) und/oder c).

13. Verwendung der Folie nach einem oder mehreren der Ansprüche 1 bis 9 zum Verpacken von Nahrungs- und Genußmitteln.

14. Verwendung der Folie nach einem oder mehreren der Ansprüche 1 bis 11 als fotografischer Film.

15. Verwendung der Folie nach einem oder mehreren der Ansprüche 1 bis 11 als grafischer Film.

16. Verwendung der Folie nach einem oder mehreren der Ansprüche 1 bis 11 als laminierfähige Folie.

17. Verwendung der Folie nach einem oder mehreren der Ansprüche 1 bis 11 als metallisierbare Folie.

18. Verwendung der Folie nach einem oder mehreren der Ansprüche 1 bis 11 als bedruckbare Folie.
